Europäisches Patentamt

European Patent Office

Office européen des brevets

(19)

(11) **EP 1 602 671 A1**

(12) **EUROPEAN PATENT APPLICATION**
published in accordance with Art. 158(3) EPC

(43) Date of publication:
**07.12.2005 Bulletin 2005/49**

(51) Int Cl.⁷: **C08F 6/00**

(21) Application number: **04714947.1**

(22) Date of filing: **26.02.2004**

(86) International application number:
**PCT/JP2004/002328**

(87) International publication number:
**WO 2004/078796 (16.09.2004 Gazette 2004/38)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **06.03.2003 JP 2003059418**

(71) Applicant: **SUMITOMO SEIKA CHEMICALS CO.,
LTD.
Kako-gun, Hyogo 675-0145 (JP)**

(72) Inventors:
• **KOUNO, Michihisa**
  **c/o Planning and Technical Dept.**
  **Shikama-ku, Himeji-shi, Hyogo 6728 (JP)**
• **MAEDA, Nobuhiro**
  **c/o Planning and Technical Dept.**
  **Shikama-ku, Himeji-shi, Hyogo 67280 (JP)**

(74) Representative: **Hayes, Adrian Chetwynd
Boult Wade Tennant,
Verulam Gardens
70 Gray's Inn Road
London WC1X 8BT (GB)**

(54) **METHOD OF MANUFACTURING WATER ABSORBING RESIN AND DRYING APPARATUS USED FOR THE METHOD**

(57)    A method of making water absorbing resin according to the present invention includes a polymerization step for producing a water absorbing resin by reverse-phase suspension polymerization; and a drying step for drying the water absorbing resin obtained in the polymerization step. In the drying step, the drying is made by using a dryer (X1) which includes: an end wall (21), an opposite end wall (22), a circumferential wall (23) and a rotation shaft (24) between these end walls, stirring means (25) provided in the rotation shaft (24) for stirring the water absorbing resin while moving the resin from the end wall (21) to the end wall (22), and stirring means (26) provided in the rotation shaft (24) between the stirring means (25) and the end wall (22) for stirring the water absorbing resin while moving the resin from the end wall (22) to the end wall (21).

FIG.3

EP 1 602 671 A1

**Description**

<u>Technical Filed</u>

The present invention relates to a method of manufacturing water absorbing resin, the method including a polymerization step that uses reverse-phase suspension polymerization, and a drying step performed after the polymerization step. The present invention also relates to a drying apparatus used for the manufacturing method.

<u>Background Art</u>

In recent years, initially powdered, water absorbing resin materials have been used in various fields, including sanitary goods such as paper diapers and napkins, or farming/horticultural materials such as water-retentive agents and ameliorants, or industrial materials such as water-stopping material and dew condensation preventing material. In particular, in the field of sanitary products such as paper diapers and sanitary napkins, the demand becomes higher year after year. Such water absorbing resins are disclosed in JP-A-S62-172006 and H03-227301 for example.

Generally, water absorbing resins are lightly cross-linked, high-molecular compounds. Water absorbing resins can be made by cross-linking such polymers as carboxymethylcellulose, polyethyleneoxide, starch-acrylonitrile graft copolymer hydrolysate, polyacrylate, and vinyl alcohol-acrylate copolymer.

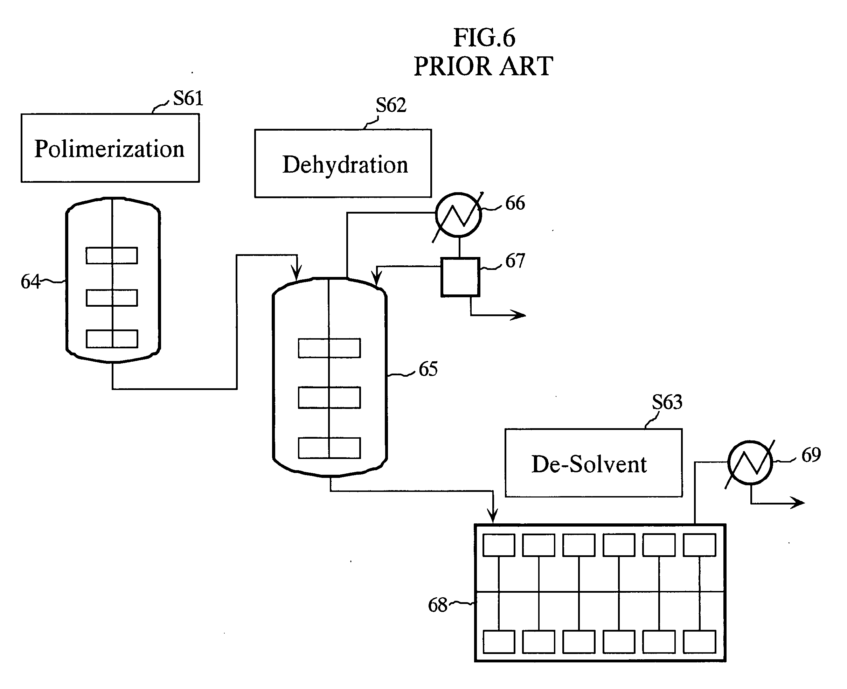

Fig. 6 shows a conventional method of making such a water absorbing resin. The conventional method of making water absorbing resin includes a polymerization step S61, dehydration step S62, and de-solvent step S63.

In the polymerization step S61, a water absorbing resin is produced in a reaction vessel 64 in a polymerization reaction by reverse-phase suspension polymerization method. The polymerization reaction is conducted in a state, for example, where an aqueous solution containing a certain resin material such as a water-soluble monomer and a radical polymerization initiator is dispersed in a hydrophobic solvent by suspension with a surfactant. The surfactant stabilizes the dispersed monomer aqueous solution. The hydrophobic solvent is provided by a solvent which does not dissolve the monomer nor the polymer obtained. The water absorbing resin produced in the polymerization step S61 undergoes the next step i.e. the dehydration step S62 in the form of slurry.

At the dehydration step S62, the slurry of the absorbent resin is held in a dehydration vessel 65 to remove a predetermined amount of moisture. Specifically, first, water and the solvent in the slurry are distilled at normal pressure, and condensed in a condenser 66. Next, the condensed liquid is moved from the condenser 66 to a separator 67, where it is left still to allow the water and the solvent to separate. The solvent separated from water is returned to the dehydration vessel 65 to be used for adjusting the viscosity of the absorbent resin-containing slurry in the vessel 65. Meanwhile, the separated water is discharged out of the apparatus.

After the dehydration process, the slurry which contains the water absorbing resin then undergoes the de-solvent step S63. In the de-solvent step S63, the water absorbing resin is dried in a de-solvent dryer 68. Specifically, the solvent and remaining water in the slurry are distilled at normal pressure and collected in a condenser 69.

As described above, in the conventional method of making water absorbing resin, a step for decreasing water content in the slurry (dehydration step S62) is performed before a step for drying the water absorbing resin by removing the solvent (de-solvent step S63).

In drying a slurry of water absorbing resin produced by reverse-phase suspension polymerization method, it is known that if water and the solvent are distilled simultaneously and if the solvent is not recycled, the residue is water absorbing resin containing a relatively large amount of water. This is because the solvent, which takes a considerable part of the azeotropic composition of the water and the solvent, is removed almost entirely before the water. Under such a high water content state, the water absorbing resin is very soft and can easily be broken into pieces. The particular components coagulate easily, and therefore are difficult to dry appropriately. In light of this, in the conventional method, the drying of the slurry obtained in the polymerization step S61 is performed by simultaneously removing the solvent and a small amount of water at the de-solvent step S63 after the water content is sufficiently reduced at the dehydration step S62.

However, according to the conventional method, the solvent distilled at the dehydration step S62 needs be returned to the slurry. In the drying process of water absorbing resin, returning the removed liquid component (solvent) to the target of drying (water absorbing resin) is an inefficient process, resulting in a large energy loss.

<u>Disclosure of the Invention</u>

The present invention has been proposed under the circumstances as described above, and it is an obj ect of the present invention to provide a method of making a water absorbing resin using a small amount of energy, and to provide a drying apparatus used for the method.

A first aspect of the present invention provides a method of making water absorbing resin. The method includes a polymerization step for producing a water absorbing resin by reverse-phase suspension polymerization method, and a drying step for drying the water absorbing resin produced in the polymerization step. The drying of the water absorbing resin in the drying step is performed by using a dryer which includes: a first end wall, a second end wall opposite to the first end wall, a circumferential wall and rotation shaft extending between these end walls, first stirring means provided on the rotation shaft for stirring the water absorbing resin while moving the resin from the first end wall to the second end wall, and second stirring means provided on the rotation shaft between the first stirring means and the second end wall for stirring the water absorbing resin while moving the resin from the second end wall to the first end wall.

In the method of making a water absorbing resin according to the first aspect of the present invention, a polymerization step is conducted and a drying step follows thereafter. In the polymerization step, a water absorbing resin is produced by means of reverse-phase suspension polymerization method. The water absorbing resin is obtained as contained or as dispersed in a slurry, in the state of high water content. In the drying step, a dryer which has the construction described above is used. In the dryer, the slurry is dried while being stirred. Specifically, the slurry is put into a vessel provided by a circumferential wall and two end walls. Thereafter, by rotating the rotation shaft, the slurry i.e. the high-water-content water absorbing resin is stirred by the first stirring means provided on the shaft on the first-end-wall side and the second stirring means provided on the shaft on the second-end-wall side. During this, the first stirring means stirs the water absorbing resin while moving the polymer in the direction from the first end wall to the second end wall. Simultaneously, the second stirring means stirs the water absorbing resin while moving the polymer in the direction from the second end wall to the first end wall. As a result, counter currents of the slurry i.e. of the high-water-content water absorbing resin develop in the dryer. The inventor of the present invention et al. have found that stirring the slurry i.e. the high-water-content water absorbing resin in such a way as to develop counter currents will enable to dry the high-water-content water absorbing resin which tends to aggregate or collapse, without causing the aggregation or undue collapse. In other words, when stirring the slurry or the high-water-content water absorbing resin under a predetermined pressure condition and a temperature condition in such a way as to develop the counter currents as described above, it is possible to distill a sufficient amount of water away together with the solvent, without causing the water absorbing resin to aggregate or collapse unduly.

According to the method offered by the first aspect of the present invention, it is possible to distil a sufficient amount of water together with the solvent in the drying step, without causing aggregation or undue collapse. Thus, there no longer is a need for the dehydration step described earlier in relation with the conventional method which involves a relatively large energy loss in recycling the solvent. Therefore, according to the method offered by the first aspect of the present invention, it is possible to manufacture a water absorbing resin with a lower amount of energy than e.g. in the conventional method.

In the first aspect of the present invention, preferably, the dryer further includes a third stirring means for moving the water absorbing resin in a direction of rotation of the rotation shaft. According to such a constitution, when driving the dryer, the first stirring means stirs the water absorbing resin while moving the polymer in the direction from the first end wall to the second end wall, the second stirring means stirs the water absorbing resin while moving the polymer in the direction from the second end wall to the first end wall, and simultaneously, the third stirring means moves the water absorbing resin in the direction of rotation of the rotation shaft. The third stirring means such as this is suitable to give an appropriate revolving movement around the rotation shaft to the slurry or the water absorbing resin which is being dried in the dryer.

Preferably, the first stirring means and/or the second stirring means are provided by a ribbon screw. Ribbon screws are suitable for the first and the second stirring means which are responsible for developing counter currents.

Preferably, the first stirring means and/or the second stirring means move at a circumferential end speed not faster than 1 m/s, and more preferably, 0.3 through 0.7 m/s. If the dryer is provided with the third stirring means, the circumferential end speed of the third stirring means should preferably be set in the above-specified range in place of the circumferential end speed of the first or the second stirring means. From a view point of efficiency in drying, the circumferential end speed should preferably be 0. 3 m/s or faster. From a view point of reduced aggregation and collapse of the water absorbing resin, the circumferential end speed should preferably be 0.7 m/s or slower.

Preferably, the first stirring means and/or the second stirring means have their outermost edges spaced from the circumferential wall by 1 through 20 mm, and more preferably by 3 through 15 mm. If the dryer is provided with the third stirring means, the third stirring means should have its outermost edge or circumferential end spaced from the circumferential wall by a value in the range given above, in place of the outermost edges or the first stirring means and of the second stirring means. From the view point of achieving efficiency in drying while reducing aggregation and collapse of the water absorbing resin, the above-mentioned distance should be kept within the specified range.

Preferably, the dryer has an internal pressure of 5 through 100 kPa in the drying step and more preferably 20 through 70 kPa in order to achieve a high drying efficiency. Preferably, the dryer has an internal temperature of 60 through 100 °C in the drying step, and more preferably, 80 through 90°C from the view point of shortening of drying time and less decomposition of the water absorbing resin due to heating.

The water absorbing resin includes a water-soluble ethylenic unsaturated monomer as a component. High-molecular compound provided by polymerization of water-soluble ethylenic unsaturated monomer is suitable as a water absorbing resin.

A second aspect of the present invention provides an apparatus for drying a water absorbing resin fabricated by reverse-phase suspension polymerization method. The apparatus includes: a first end wall, a second end wall opposite thereto, a circumferential wall and rotation shaft between these end walls, a first stirring means provided on the rotation shaft for stirring the water absorbing resin while moving the polymer in a direction from the first end wall to the second end wall, and a second stirring means provided on the rotation shaft between the first stirring means and the second end wall for stirring the water absorbing resin while moving the polymer in a direction from the second end wall to the first end wall. A dryer having the construction as described above can be utilized in a drying step in the method according to the first aspect of the present invention.

In the second aspect of the present invention, preferably, the dryer further include a third stirring means for moving the water absorbing resin in a direction of rotation of the rotation shaft.

Preferably, the first stirring means and/or the second stirring means are provided by a ribbon screw.

Preferably, the first stirring means and/or the second stirring means have their outermost edges spaced from the circumferential wall by 1 through 20 mm, and more preferably, 3 through 15 mm. If the dryer is provided with the third stirring means, the third stirring means should have its outermost edge spaced from the circumferential wall by a value in the range given above, in place of the outermost edges of the first stirring means and the second stirring means.

Brief Description of the Drawings

Fig. 1 is a process diagram of a method of making water absorbing resin according to a first embodiment of the present invention.

Fig. 2 is a perspective view of a dryer according to the present invention.

Fig. 3 is a sectional view of the dryer, with partial cut out, taken in lines III-III in Fig. 2. The figure does not illustrate part of two end walls and of a circumferential wall.

Fig. 4 is a sectional view of the dryer, with partial cut out, taken in lines IV-IV in Fig. 2. The figure does not illustrate part of two end walls and of a circumferential wall.

Fig. 5 is a process diagramof a method of making water absorbing resin according to a second embodiment of the present invention.

Fig. 6 is a process diagram of a conventional method of making water absorbing resin.

Best Mode for Carrying Out the Invention

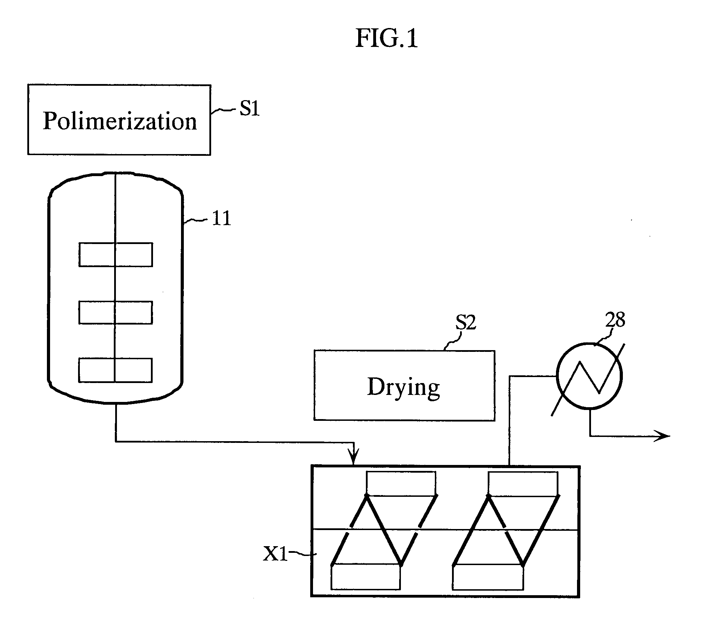

Fig. 1 is a process diagram of a method of making water absorbing resin according to a first embodiment of the present invention. The method of the present embodiment includes a polymerization step S1 and a drying step S2.

In the polymerization step S1, a water absorbing resin is produced in a reaction vessel 11 through a polymerization reaction caused by reverse-phase suspension polymerization. Specifically, a radical polymerization is caused to occur in the reaction vessel 11 by mixing substances, such as an aqueous solution containing water-soluble ethylenic unsaturated monomer for providing the resin, a hydrophobic solvent which does not significantly dissolve the monomer nor the resultant polymer, a surfactant for stabilizing the dispersion of the monomer solution in the solvent, and a radical polymerization initiator. As required, a cross-linking agent is put into the vessel. For the reaction vessel 11, use may be made of a batch-type mixing vessel that can be opened vertically.

Examples of the water-soluble ethylenic unsaturated monomer used in the present invention include (meth) acrylic acid [the notation "(meth)acryl" means "acryl" or "methacryl"], 2-(meth)acrylamido-2-methylpropane sulfonic acid, and their alkali metal salts. Examples of the water-soluble ethylenic unsaturated monomer include nonionic monomers such as (meth)acrylamide, N,N-dimethyl acrylamide, 2-hydroxyethyl (meth)acrylate, and N-methylol(meth)acrylamide. Other examples include amino group-containing unsaturated monomers such as diethylamino ethyl (meth) acrylate and diethyl amino propyl (meth)acrylate, as well as their quaternary compounds. In the present embodiment, acrylic acid and its alkali metal salts, methacrylic acid and its alkali metal salts, acrylamide, methacrylamide, and N, N-dimethyl acrylamide are particularly suitable. These monomers may be used individually, or two or more kinds may be used together in a single reaction system.

The concentration of the water-soluble ethylenic unsaturated monomer in the water-soluble ethylenic unsaturated monomer aqueous solution when the solution is put into the reaction vessel 11 is preferably 25 wt% through saturated concentration. Further, if the water-soluble ethylenic unsaturated monomer includes an acid group, the monomer aqueous solution may be prepared by neutralizing the acid group with an alkali metal. The degree of neutralization by the alkali metal is preferably 10-100 mol% of the acid group in the pre-neutralization water-soluble ethylenic unsaturated monomer in view of giving a high speed water absorbing capability to the obtained water absorbing resin and avoiding potential safety problems which can arise from an excess amount of the alkali metal. Examples of the neutralizing alkali metal are lithium, sodium, and potassium. Sodium and potassium are particularly preferred in the present embodiment.

Examples of the solvent include: aliphatic hydrocarbons such as n-hexane, n-heptane, and ligroine; alicyclichydrocarbons such as cyclopentane, methylcyclopentane, cyclohexane, and methylcyclohexane; and aromatic hydrocarbons such as benzene, toluene, and xylene. In the present embodiment, n-hexane, n-heptane, cyclohexane, toluene, and xylene can be used particularly suitably. The amount of solvent to be used is preferably 50-600 weight parts to 100 weight parts of the water-soluble ethylenic unsaturated monomer, and more preferably 100-550 weight parts, in view of the fact that it is easy to remove polymerization heat and to control the polymerization temperature.

Examples of the surfactant include nonionic surfactants such as sorbitan fatty acid ester, polyglycerine fatty acid ester, sucrose fatty acid ester, sorbitol fatty acid ester, polyoxyethylene alkyl phenyl ether, and hexaglyceryl monobehenate, as well as anionic surfactants such as fatty acid salts, alkylbenzenesulfonic acid salts, alkyl methyl tauric acid salts, polyoxyethylene alkylphenyl ether sulfate esters, and polyoxyethylene alkyl ether sulfonic acid salts. In the present embodiment, sorbitan fatty acid ester, polyglycerine fatty acid ester, sucrose fatty acid ester, and hexaglyceryl monobehenate can be used particularly suitably. The amount of surfactant to be used is preferably 0.1 through 5 weight parts to 100 weight parts of the water-soluble ethylenic unsaturated monomer aqueous solution, and more preferably 0.2 through 3 weight parts.

Examples of the radical polymerization initiator include water-soluble radical polymerization initiators such as potassium persulfate, ammoniumpersulfate and sodium persulfate, as well as oil-soluble radical polymerization initiators such as benzoyl peroxide and azobisisobutylonitrile. Alternatively, a water-soluble radical polymerization initiator may be combined with a nitrite for example, in the form of a redox initiator. The amount of radical polymerization initiator to be used is preferably 0.05 mmol through 0.01 mol with respect to 1 mol of the water-soluble ethylenic unsaturated monomer in view of shortening the polymerization reaction time yet avoiding wild polymerization reaction.

Examples of the cross-linking agent which is added as necessary include di- or tri-(meth)acrylic acid esters of a polyol such as ethylene glycol, propylene glycol, trimethylol propane, glycerine, polyoxyethylene glycol, polyoxypropylene glycol, and polyglycerine. Another group of examples of the cross-linking agent include: unsaturated polyesters obtained from a reaction of unsaturated acid such as maleic acid and fumalic acid with a polyol; bis-acrylamide such as N,N-methylene bis-acrylamide; di- or tri-(meth)acrylic acid esters obtained from a reaction of polyepoxide with (meth)acrylic acid;and di-(meth)acrylic acid carbamyl esters obtained from a reaction of polyisocyanate such as tolylene diisocyanate and hexamethylene diisocyanate with hydroxyethyl (meth)acrylate. Still alternatively, the cross-linking agent may be provided by: a compound which has more than two polymeric unsaturated groups such as arylated starch, arylated cellulose, diaryl phthalate, N,N',N''-triaryl isocyanate, and divinyl benzene; a diglycidyl ether compound such as (poly) ethylene glycol diglycidyl ether, (poly) propylene glycol diglycidyl ether, and (poly) glycerine diglycidyl ether, a haloepoxy compound such as epichlorohydrin, epibromohydrin, and alpha-methylepichlorohydrin; or an isocyanate compound which has two or more reactive functional groups such as 2,4-tolylene diisocyanate and hexamethylene diisocyanate. The amount of the cross-linking agent to be added is preferably 0.001 through 2 weight parts with respect to 100 weight parts of the water-soluble ethylenic unsaturated monomer for appropriate cross-linking in the obtained polymer, which will suppress the water solubility of the obtained polymer while rendering the water absorbing resin sufficient water absorbability.

In the polymerization step S1, an aqueous solution of a water-soluble ethylenic unsaturated monomer selected from those listed above, a selected surfactant and a selected radical polymerization initiator as well as a cross-linking agent selected as necessary are mixed with each other in a solvent under heat in the reaction vessel 11, whereby a reverse-phase suspension polymerization is conducted in the water-in-oil system. Generally, a reverse-phase suspension polymerization method yields a polymer in the form of granule. In correlation with volume distribution of the monomer aqueous solution which is the reaction medium dispersed in the non-reaction medium i.e. the hydrophobic solvent, the polymer has a relatively sharp particle-size distribution. The reaction temperature in the polymerization reaction is selected appropriately in accordance with the radical polymerization initiator to be employed. In view of quick polymerization reaction, shortened polymerization time, and easy removal of polymerization heat, the reaction temperature is preferably 20 through 110°C and more preferably 40 through 80°C. With such a reaction temperature, the reaction time is preferably 0.5 through 4 hours.

In the polymerization step S1 according to the present invention, so called seed polymerization method may be utilized in the reverse-phase suspension polymerization method for increased particle size of the finally fabricated particles. When using a seed polymerization method, it is preferable that the seed particles are grown in a plurality of stages of polymerization.

For example, in a two-stage seed polymerization method, the first polymerization stage is conducted under a state where an aqueous solution containing a dissolved row material monomer is appropriately dispersed in a solvent, whereby primary particles are produced. Next, this first-stage polymerization is stopped or allowed to complete, and then a significant amount of surfactant is removed by precipitation through cooling for example. Then, an amount of the monomer aqueous solution is added to grow aggregates to appropriate sizes. Then, the second-stage of polymerization is conducted, in which a plurality of the primary particles which form the aggregates are cross-linked to form secondary particles. The removal of a significant amount of surfactant before the second polymerization reaction reduces the extent of dispersion of the additional amount of monomer aqueous solution added for the second polymerization reaction, and thereby increases the size of the secondary particles. By using a plurality of polymerization stages, it is possible to increase the size of the particles finally obtained in the reverse-phase suspension polymerization method.

The water absorbing resin produced in the polymerization step S1 as described above then undergoes the next step i.e. the drying step S2, in the form of slurry. In the drying step S2, the water absorbing resin is dried by a dryer X1.

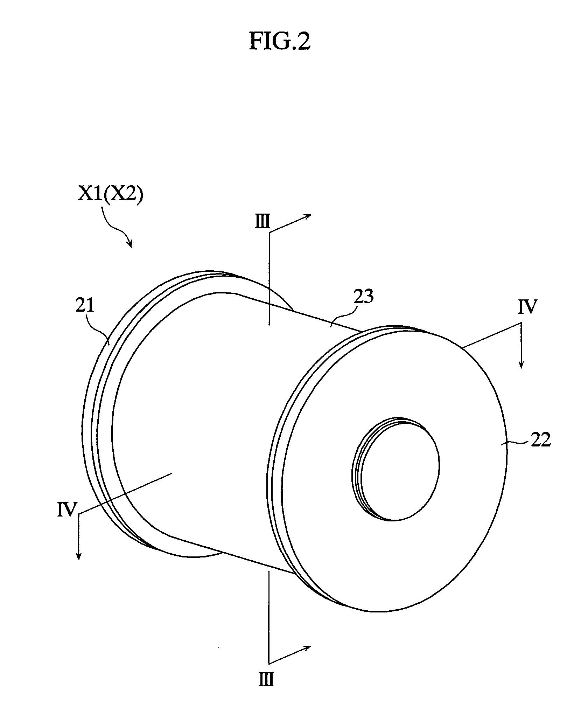

As shown in Fig. 2 through Fig. 4, the dryer X1 is an externally heated, horizontal dryer which includes end walls 21, 22, a circumferential wall 23, a rotation shaft 24, and stirring blades 25, 26, 27. Each part of the dryer is made of stainless steel for example. As shown in Fig. 1, the dryer X1 is connected with a condenser 28 (which is not illustrated in none of Fig. 2 through Fig. 4).

The end walls 21, 22 and the circumferential wall 23 provide a generally cylindrical receptor vessel in the dryer X1. The water absorbing resin which was produced in the above-described polymerization step S1 is put into the receptor vessel through an inlet (not illustrated), and the water absorbing resin which has been dried in the drying step S2 is taken out of the receptor vessel through an outlet (not illustrated). The inlet and outlet are capable of opening/closing and provided at predetermined places in the end walls 21, 22 or the circumferential wall 23. In the dryer X1 according to the present embodiment, the receptor vessel which is made of the end walls 21, 22 and the circumferential wall 23 has an inner diameter L1 of 400 mm and a length L2 of 420 mm.

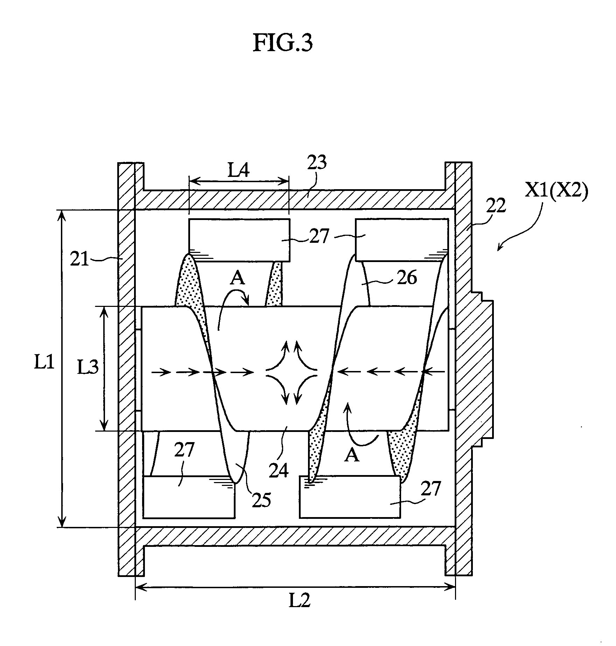

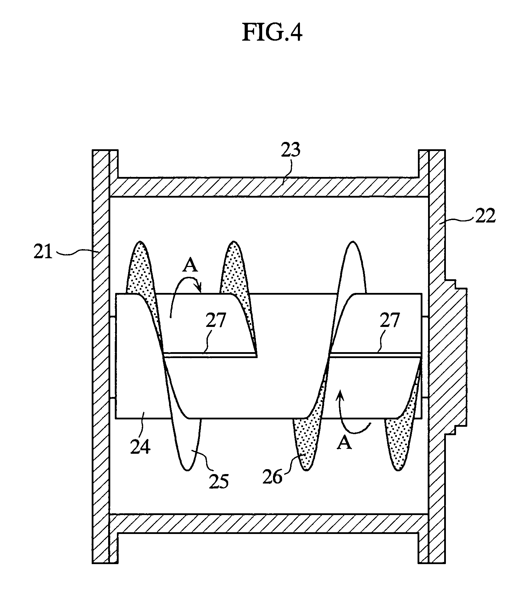

When the apparatus is set properly, the rotation shaft 24 is generally horizontal between the end walls and is connected with a predetermined driving mechanism (not illustrated). In operation, the rotation shaft 24 is rotated by the driving mechanism in the direction indicated by Arrow A in Fig. 3 and Fig. 4. In the dryer X1 according to the present embodiment, the diameter L3 of the rotation shaft 24 is 165 mm.

The stirring blades 25, 26, 27 stir the slurry or the water absorbing resin contained therein. In the present embodiment, the stirring blades 25, 26 are ribbon screws each provided around the rotation shaft 24 in opposing directions of twist to each other. Note that surfaces of the stirring blades 25, 26 facing the left-hand direction as in the figures are indicated by hatching. In the present embodiment, the stirring blades 27 are paddle blades which are fixed onto the stirring blade 25 or the stirring blade 26. Alternatively to such a construction, the stirring blades 27 may be fixed to the rotation shaft 24. In the dryer X1 according to the present embodiment, the stirring blade 27 has a length L4 of 100 mm.

When the apparatus is operating, the stirring blade 25 rotates together with the rotation shaft 24, and when the slurry is present in the apparatus, the blade stirs the surrounding slurry while moving it in the right-hand direction as in the figure. Likewise, the stirring blade 26 rotates together with the rotation shaft 24, and when the slurry is present in the apparatus, the blade stirs the surrounding slurry while moving it in the left-hand direction as in the figure. On the other hand, the stirring blades 27 rotate together with the rotation shaft 24, moving the surrounding slurry in the direction of rotation of the rotation shaft 24. The stirring blades 25, 26, 27 may take different shapes as long as each can achieve the operation described above. The blade may be paddle blades, anchor blades, pin blades, and so on.

The outermost edge of the stirring blades 27 is spaced from the circumferential wall 23 by 3 mm through 15 mm in the present embodiment. This distance represents the distance between the circumferential wall 23 and the outermost edge of the stirring blade which has a portion for drawing the outermost portion from the rotation shaft 24, of the stirring blades (stirring blade 25, stirring blade 26, and stirring blades 27) rotating together with the rotation shaft 24. Therefore, if the dryer X1 is not provided with the stirring blades 27, it is preferable that the stirring blades 25, 26 have their outer most edges spaced from the circumferential wall 23 by 3 mm through 15 mm.

In the drying step S2, first, the slurry which contains the water absorbing resin produced in the above-described polymerization step S1 is placed into the dryer X1 which has the above-described construction through a predetermined inlet (not illustrated). Next, the dryer X1 is operated to dry the slurry under predetermined temperature and pressure conditions to be detailed later, while stirring the slurry with the stirring blades 25, 26, 27. During this, the stirring blade 25 stirs the slurry or the water absorbing resin contained therein while moving them in the right-hand direction as in the figure, the stirring blade 26 stirs the slurry or the water absorbing resin contained therein while moving them in the left-hand direction as in the figure, and the stirring blades 27 move the slurry or the water absorbing resin contained therein in the direction of rotation of the rotation shaft 24. Water and solvent contained in the slurry is removed from the slurry as they vaporize, and collected in the condenser 28 through predetermined piping. The collected water and solvent are discharged appropriately from the condenser 28.

The stirring blades 27 rotate at a circumferential edge speed of 0.3 through 0.7 m/s when they are in operation in the present embodiment. The circumferential edge speed is a speed of the outermost drawing edge of the stirring blade which has a portion for circumferentially drawing the outermost portion from the rotation shaft 24, of the stirring blades (stirring blade 25, stirring blade 26, and stirring blades 27) rotating together with the rotation shaft 24. Therefore, if the dryer X1 is not provided with the stirring blades 27, it is preferable that the circumferential edge speed of the stirring blades 25, 26 is set to 0.3 through 0.7 m/s. In the present embodiment, the dryer X1 has an internal pressure, i.e. the receptor vessel has an internal pressure of 20 through 70 kPa, and an internal temperature of 80 through 90°C.

In the drying step S2, the drying operation utilizing the dryer X1 under the above-mentioned conditions is continued until water content in the water absorbing resin is no more than 10 wt%.

In the drying step S2, a countercurrent system develops in the slurry which is produced in the polymerization step S1 and contains the water absorbing resin, at a center portion of the apparatus primarily due to the rotating operation of the stirring blades 25, 26. Further, a revolving current around the rotation shaft develops in the slurry primarily due to the rotating operation of the stirring blades 27. The slurry or the water absorbing resin is thus stirred appropriately in a combination of the countercurrents and the revolving current without aggregation or undue collapse of the resin, and a sufficient amount of water is removed simultaneously with the solvent. By removing a sufficient amount of water from the slurry in the drying step S2 together with the solvent, it becomes possible to avoid the problem of decreased energy efficiency in the conventional art caused by the dehydration step conducted separately before a de-solvent step in the process of drying a water absorbing resin.

As described, according to the method of making water absorbing resin offered by the first embodiment, it is possible to fabricate a water absorbing resin efficiently. Further, in the drying step S2, it is possible to remove a sufficient amount of water together with the solvent while avoiding aggregation or undue collapse of the high-water-content water absorbing resin.

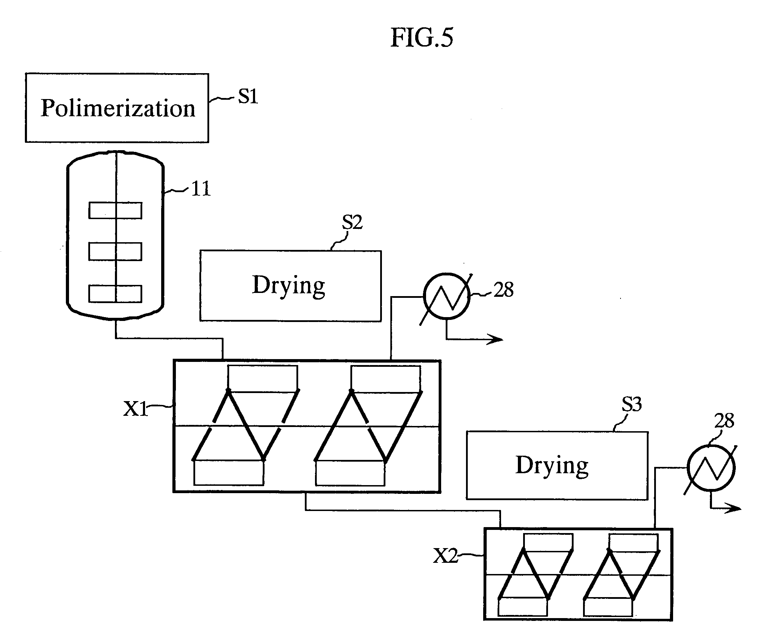

Fig. 5 is a process diagram of a method of making water absorbing resin according to a second embodiment of the present invention. The method according to the present embodiment includes a polymerization step S1, a drying step S2 and a drying step S3.

In the polymerization step S1, a water absorbing resin is produced in a reaction vessel 11 in a polymerization reaction by reverse-phase suspension polymerization method. Specifically, an aqueous solution of a water-soluble ethylenic unsaturated monomer, a surfactant, a radical polymerization initiator, and a cross-linking agent as necessary are put into a reaction vessel 11 and mixed with each other under heat thereby conduct a reverse-phase suspension polymerization in the water-in-oil system. The reaction vessel 11, materials to be used and reaction conditions are the same as used in the first embodiment. The water absorbing resin produced in the polymerization step S1 as described above then undergoes the next step of drying step S2 in the form of slurry.

In the drying step S2, the water absorbing resin is dried by a dryer X1. The dryer X1 is the same dryer X1 as described in the first embodiment. In this step, the same procedure as already described in the first embodiment is followed: The slurry which contains the water absorbing resin produced in the polymerization step S1 as described above is put in the dryer X1, then the dryer X1 is driven to dry the slurry while stirring the slurry with the stirring blades 25, 26, 27. During this step, water and solvent in the slurry are distilled away from the slurry and collected in a condenser 28 through predetermined piping. The circumferential edge speed of the stirring blades as well as the pressure and temperature inside the apparatus are the same as described in the first embodiment. In the drying step S2 according to the present embodiment, the drying operation is continued until the volume of the slurry becomes 40 through 60% of the original volume.

In the drying step S3, the water absorbing resin which has undergone the drying step S2 as described above and thus has most of the water and solvent in the slurry removed is put in a dryer X2. The water absorbing resin still contains a large amount of water and another drying process is conducted. The dryer X2 has essentially the same construction as the dryer X1, but smaller in size than the dryer X1. The size of the dryer X2, particularly the capacity of the receptor vessel is determined in accordance with the volume of the high-water-content water absorbing resin obtained through the drying step S2. In the present step, the high-water-content water absorbing resin whose volume has been reduced through the drying step S2 is put in the dryer X2, and then the dryer X2 is driven to dry the water absorbing resin while stirring the polymer with the stirring blades 25, 26, 27 provided in this dryer. During this step, water and solvent in the water absorbing resin are distilled away from the water absorbing resin and collected in a condenser 28 through predetermined piping. The circumferential edge speed of the stirring blades as well as the pressure and temperature inside the apparatus are the same as described for the drying step S2 in the first embodiment. In the present step, the drying operation is continued until water content of the water absorbing resin becomes less than 10%.

According to the present invention, the above-described two-step drying process which uses a dryer X1 having a larger receptor vessel and a dryer X2 having a smaller receptor vessel may be replaced by three-step or multiple-step process. Specifically, a plurality of dryers, as shown in Fig. 2 through Fig. 4, each having receptor vessel of a different capacity, are used in the order that the capacity of the receptor vessel will become successively smaller. In this case, each dryer dries the slurry or the water absorbing resin until a predetermined volume is attained before moving the slurry or the water absorbing resin to the next drying apparatus. Then, the final dryer dries until water content of the water absorbing resin is less than 10 weight percent.

In both of the drying steps S2, S3 according to the present embodiment, a sufficient amount of water is removed together with the solvent from the slurry as described for the drying step S2 in the first embodiment. In addition, according to the present embodiment, the object matter for drying, i.e. the slurry, is moved from the dryer X1 which has a larger receptor vessel to the dryer X2 which has a smaller receptor vessel, in the process of drying the water absorbing resin in accordance with the amount of removed water and solvent, i.e. in accordance with the volume reduction of the slurry. By using a smaller dryer which matches the reduced volume of the object matter for drying, it becomes possible to improve efficiency of heat which is primarily needed for drying. Therefore, the method of making water absorbing resin according to the second embodiment enables to fabricate water absorbing resin more efficiently. Also, in the drying steps S2, S3, it is possible to avoid aggregation or undue collapse of the high-water-content water absorbing resin when removing a sufficient amount of water together with the solvent.

[Example 1]

<Fabrication of a Water absorbing resin>

A jacketed polymerization vessel (40 L capacity) was prepared. As a solvent, 22 L of n-heptane was put in the vessel, and as a surfactant, hexaglyceryl monobehenilate (trade name: Nonion GV-106, produced by Nippon Yushi K.K.) having a HLB value of 13.1 was added by the weight of 55.2 g. The mixture was heated up to 50°C until the surfactant dissolved, and then cooled to 30°C.

In a mixing vessel (20 L capacity), 3680 g of 80 wt% acrylic acid aqueous solution was prepared. While the vessel was cooled with ice from outside, 6104 g of 20.1 wt% sodium hydroxide aqueous solution was added by drops, to neutralize 75 mol% of the acrylic acid. Thereafter, as a polymerization initiator, 4.4 g of potassium persulfate was added and dissolved. In this process, 9788 g of acrylic acid aqueous solution (a first monomer aqueous solution) neutralized by an alkali metal salt was prepared. The first monomer aqueous solution was maintained at a temperature of 20°C. Also, using the same method as used for the first monomer aqueous solution, 9788 g of a second monomer aqueous solution was prepared. The second monomer aqueous solution was maintained at a temperature of 20°C.

Next, the first monomer aqueous solution was poured into the polymerization vessel and dispersed by stir. Internal atmosphere of the system was sufficiently replaced with nitrogen, and then a first-stage polymerization reaction was conducted by heating, to obtain a first polymerized slurry. The reaction temperature was 70°C and the reaction time was 3 hours. The first polymerization slurry was cooled to 20°C. Next, the second monomer aqueous solution was added into the polymerization vessel, dispersed by stir, and heated after internal atmosphere of the system was sufficiently replaced with nitrogen, to conduct a second-stage polymerization reaction. The reaction temperature was 70°C and the reaction time was 3 hours.

The above-described polymerization step yielded a slurry which contained a water absorbing resin. The slurry was then dried in an externally heated, horizontal type, stainless-steel dryer as shown in Fig. 2. The dryer had stirring blades 25, 26 each provided by a ribbon screw, and stirring blades 27 each provided by a paddle blade. The distance between the outermost edge of the stirring blades 27 and the circumferential wall 23 was set to 10 mm. In this drying step, the pressure in the dryer was 55 kPa, the temperature was 90°C, the circumferential edge speed of the stirring blades 27 was 0.3 m/s, and the drying was made for 2.3 hours. As a result, 7620 g of water absorbing resin was obtained.

The water absorbing resin according to the present example was thus fabricated as described above. This water absorbing resin had a weight-averaged particle size of 450 μm. Particles not smaller than 850 μm did not exceed 0.5 wt%, and particles not greater than 106 μm did not exceed 0.1 wt%.

<Measuring a Rate of Residual Monomer>

The water absorbing resin according to the present example was measured for the rate of residual monomer. Specifically, first, 2 g of the water absorbing resin fabricated as the above was dispersed in 500g of 0.9 wt% saline solution and stirred for an hour at room temperature. Next, this dispersion solution was filtrated to separate the water absorbing resin from the saline solution. Next, the obtained saline solution was subjected to high performance liquid chromatography (HPLC) to measure the amount of dissolved monomer in the obtained saline solution. As a preparation for the measurement of the amount of monomer, a calibration curve was made on the basis of a plurality of monomer solutions of different known concentration values, and on the basis of monomer concentration dependency of HPLC eluate absorbance. A monomer concentration of the filtrated saline solution was calculated on the basis of the calibration curve, and then, the amount of monomer A(g) contained in the 2 g of water absorbing resin according to the present example was calculated. The amount of monomer thus obtained was assigned in the following Formula (1) to obtain a rate of residual monomer. The rate of residual monomer obtained for the water absorbing resin according to the present embodiment was 158 ppm.

$$\text{Rate of residual monomer (ppm)} = [A(g) \, /2 \, (g)] \times 10^6 \, \text{(ppm)} \qquad (1)$$

<Measuring a Water Absorbing Capacity>

One gram of the water absorbing resin fabricated as described above was dispersed in 250 mL of 0.9 wt% saline solution, and allowed to swell as much. Next, the dispersion solution was filtrated with a 200-mesh wire net to separate the swollen resin from the saline solution. Next, the swollen resin separated as the above was weighed, to measure the water absorbing capacity (g/g) of the water absorbing resin on the basis of the following Formula (2). The water absorbing resin had a water absorbing capacity of 70 g/g.

$$\text{Water absorbing capacity (g/g)} =$$

$$[\text{Wet weight(g)-Dry weight (1g)}]/\text{Dry weight (1g)} \qquad (2)$$

[Example 2]

Ajacketedpolymerizationvessel (40 L capacity) was prepared. As a solvent, 22 L of n-heptane was put in the vessel, and as a surfactant, sorbitan monolaurate (trade name: Nonion LP-20R, produced by Nippon Yushi K.K.) having a HLB value of 8.6 was added by the weight of 38.8 g. The mixture was heated up to 50°C until the surfactant dissolved, and then cooled to 30°C.

On the other hand, using the same procedures as in Example 1, 9788 g of a first monomer solution was prepared. Also, in a mixing vessel (20 L capacity), 1840 g of 80 wt% acrylic acid aqueous solution was prepared. While the vessel was cooled with ice from outside, 3052 g of 20.1 wt% sodium hydroxide aqueous solution was added by drops, to neutralize 75 mol% of the acrylic acid in the solution. Thereafter, as a polymerization initiator, 4.4 g of potassium persulfate was added and the mixture was dissolved. In this process, 4892 g of acrylic acid aqueous solution (a second monomer aqueous solution) neutralized by an alkali metal salt was prepared. The first and the second monomer aqueous solutions were maintained at a temperature of 20°C.

Next, the first monomer aqueous solution was poured into the polymerization vessel and dispersed by stir. Internal atmosphere of the system was sufficiently replaced with nitrogen, and then a first-step polymerization reaction was conducted by heating, to obtain a first polymerized slurry. The reaction temperature was 70°C and the reaction time was 3 hours. The first polymerization slurry was cooled to 10°C. Next, the second monomer aqueous solution was added to the polymerization vessel, dispersed by stir, and heated after internal atmosphere of the system was sufficiently replaced with nitrogen, to conduct a second-stage polymerization reaction. The reaction temperature was 70°C and the reaction time was 3 hours.

The above-described polymerization step yielded a slurry which contained a water absorbing resin. The slurry was then dried in a externally heated, horizontal type, stainless-steel dryer as shown in Fig. 2. The dryer had stirring blades 25, 26 each provided by a ribbon screw, and stirring blades 27 each provided by a paddle blade. The distance between the outermost edge of the stirring blades 27 and the circumferential wall 23 was set to 5mm. In this drying step, the pressure in the dryer was 65 kPa, the temperature was 80°C, the circumferential edge speed of the stirring blades 27 was 0.5 m/s, and the drying was made for 1.8 hours. As a result, 5704 g of water absorbing resin was obtained.

The water absorbing resin according to the present example was thus fabricated as described above. This water absorbing resin had a weight-averaged particle size of 340 μm. Particles not smaller than 850 μm did not exceed 1.5 wt%, and particles not greater than 106 μm did not exceed 1. 0 wt%. The water absorbing resin according to the present example had a residual monomer content of 78 ppm and a water absorbing capacity of 69 g/g according to the same method of measurement as in Example 1.

[Example 3]

A jacketed polymerization vessel (40 L capacity) was prepared. As a solvent, 22 L of n-heptane was put in the vessel, and as a surfactant, HLB 13.1 hexaglyceryl monobehenilate (trade name: Nonion GV-106, produced by Nippon Yushi K.K.) was added by the weight of 36.8 g. Also, 36.8 g of maleic acid anhydride adduct modified polyethylene (trade name: Hiwax 1105A, produced by Mitsui Chemicals, Inc.) was added. The mixture was heated up to 80°C until the surfactant dissolved, and then cooled to 30°C.

In a mixing vessel (20 L capacity), 3680 g of 80 wt% acrylic acid aqueous solution was prepared. While the vessel was cooled with ice from outside, 6104 g of 20.1 wt% sodium hydroxide aqueous solution was added by drops, to neutralize 75 mol% of the acrylic acid. Thereafter, as a polymerization initiator, 4.4 g of potassium persulfate and 736 mg of ethylene glycol diglycidyl ether were added and was dissolved. In this process, 9788 g of acrylic acid aqueous solution (a first monomer aqueous solution) neutralized by an alkali metal salt was prepared. The first monomer aqueous solution was maintained at a temperature of 20°C. Also, using the same method as used for the first monomer aqueous solution, 9788g of a secondmonomer aqueous solution was prepared. The second monomer aqueous solution was maintained at a temperature of 20°C.

Next, the first monomer aqueous solution was poured into the polymerization vessel and dispersed by stir. Internal atmosphere of the system was sufficiently replaced with nitrogen, and then a first-stage polymerization reaction was conducted by heating, to obtain a first polymerized slurry. The reaction temperature was 70°C and the reaction time was 3 hours. The first polymerization slurry was cooled to 20°C. Next, the second monomer aqueous solution was added into the polymerization vessel, dispersed by stir, and heated after internal atmosphere of the system was sufficiently replaced with nitrogen, to conduct a second-stage polymerization reaction. The reaction temperature was 70°C and the reaction time was 3 hours.

The above-described polymerization step yielded a slurry which contained a water absorbing resin. The slurry was then dried in an externally heated, horizontal type, stainless-steel dryer as shown in Fig. 2. The dryer had stirring blades 25, 26 each provided by a ribbon screw, and stirring blades 27 each provided by a paddle blade. The distance between the outermost edge of the stirring blades 27 and the circumferential wall 23 was set to 15 mm. In this drying step, the pressure in the dryer was 65 kPa, the temperature was 80°C, the circumferential edge speed of the stirring blades 27 was 0.3 m/s, and the drying was made for 2.0 hours. As a result, 7860 g of water absorbing resin was obtained.

The water absorbing resin according to the present example was thus fabricated as described above. This water absorbing resin had a weight-averaged particle size of 380 μm. Particles not smaller than 850 μm did not exceed 1.0 wt%, and particles not greater than 106 μm did not exceed 0.5 wt%. The water absorbing resin according to the present example had a residual monomer content of 31 ppm and a water absorbing capacity of 59 g/g according to the same method of measurement as in Example 1.

[Comparative Example]

Using the same two-stage reverse-phase suspension polymerization method as in Example 1, a polymerization reaction was made to fabricate a water absorbing resin according to the present Comparative Example. The slurry which contained the fabricated water absorbing resin was dried with an externally heated, horizontal type, stainless-steel dryer having stirring blades which are different from the stirring blades 25, 26, 27 shown in Fig. 2. In this dryer, blades stir the slurry in the direction of rotation, and the rotation shaft is also provided with disc-shaped stirring blades extending perpendicularly from the rotation shaft. Therefore, in the drying step according to the present Comparative Example, the slurry in the dryer is not subject to positive or sufficient movement in the directions in which the rotation shaft extends. With the dryer as described above, the distance between the outermost edge of the stirring blades and the circumferential wall was set to 25 mm. In this drying step, the pressure in the dryer was 55 kPa, the temperature was 90°C, the circumferential edge speed of the stirring blades was 1.6 m/s, and the drying was made for 2.8 hours. As a result, 7688 g of water absorbing resin was obtained.

The water absorbing resin according to the present Comparative Example was thus fabricated as the above. This water absorbing resin had a weight-averaged particle size of 510 μm. Particles not smaller than 850 μm did not exceed 16 wt%, and particles not greater than 106 μm did not exceed 5.2 wt%. The water absorbing resin according to the present example had a residual monomer content of 148 ppm and a water absorbing capacity of 71 g/g according to the same method of measurement as in Example 1.

[Evaluation]

The water absorbing resins as Examples 1 through 3 according to the present invention had a low residual monomer content, a high water absorbing capacity and a sharp particle-size distribution. On the contrary, the water absorbing resin in the Comparative Example did not have a practicably sharp particle-size distribution.

**Claims**

**1.** A method of making water absorbing resin, comprising:

a polymerization step for producing a water absorbing resin by reverse-phase suspension polymerization method; and
a drying step for drying the water absorbing resin produced in the polymerization step;

wherein the drying of the water absorbing resin in the drying step is performed by using a dryer including: a first end wall, a second end wall opposite to the first end wall, a circumferential wall and rotation shaft extending between these end walls, first stirring means provided on the rotation shaft for stirring the water absorbing resin while moving the resin from the first end wall to the second end wall, and second stirring means provided on the rotation shaft between the first stirring means and the second end wall for stirring the water absorbing resin while moving the resin from the second end wall to the first end wall.

2. The method of making water absorbing resin according to claim 1, wherein the dryer further includes a third stirring means for moving the water absorbing resin in a direction of rotation of the rotation shaft.

3. The method of making water absorbing resin according to claim 1, wherein the first stirring means and/or the second stirring means is provided by a ribbon screw.

4. The method of making water absorbing resin according to claim 1, wherein the first stirring means and/or the second stirring means moves at a circumferential end speed not faster than 1 m/s.

5. The method of making water absorbing resin according to claim 2, wherein the third stirring means moves at a circumferential end speed not faster than 1 m/s.

6. The method of making water absorbing resin according to claim 1, wherein the first stirring means and/or the second stirring means includes a circumferential end spaced from the circumferential wall by 1 ~ 20 mm.

7. The method of making water absorbing resin according to claim 2, wherein the third stirring means includes a circumferential end spaced from the circumferential wall by 1 - 20 mm.

8. The method of making water absorbing resin according to claim 1, wherein the dryer has an internal pressure of 5 ~ 100 kPa in the drying step.

9. The method of making water absorbing resin according to claim 1, wherein the dryer has an internal temperature of 60 ~ 100°C in the drying step.

10. A dryer for drying a water absorbing resin produced by reverse-phase suspension polymerization, the apparatus comprising:

a first end wall; a second end wall opposite to the first end wall; a circumferential wall and rotation shaft extending between these end walls; a first stirring means provided on the rotation shaft for stirring the water absorbing resin while moving the resin from the first end wall to the second end wall; and a second stirring means provided on the rotation shaft between the first stirring means and the second end wall for stirring the water absorbing resin while moving the resin from the second end wall to the first end wall.

11. The dryer according to claim 10, further comprising a third stirring means for moving the water absorbing resin in a direction of rotation of the rotation shaft.

12. The dryer according to claim 10, wherein the first stirring means and/or the second stirring means includes a circumferential end spaced from the circumferential wall by 1 - 20 mm.

13. The dryer according to claim 11, wherein the third stirring means includes a circumferential end spaced from the circumferential wall by 1 ~ 20 mm.

# FIG.1

FIG.2

FIG.3

FIG.4

FIG.5

EP 1 602 671 A1

# FIG.6
## PRIOR ART

S61

Polimerization

S62

Dehydration

66

67

64

65

S63

De-Solvent

69

68

EP 1 602 671 A1

**INTERNATIONAL SEARCH REPORT**

| International application No. |
| --- |
| PCT/JP2004/002328 |

A. CLASSIFICATION OF SUBJECT MATTER
   Int.Cl$^7$ C08F6/00

According to International Patent Classification (IPC) or to both national classification and IPC

B. FIELDS SEARCHED

Minimum documentation searched (classification system followed by classification symbols)
   Int.Cl$^7$ C08F6/00

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 63-77904 A (Denki Kagaku Kogyo Kabushiki Kaisha), 08 April, 1988 (08.04.88), Claims; all drawings (Family: none) | 1-13 |
| Y | JP 62-235305 A (Dai-Ichi Kogyo Seiyaku Co., Ltd.), 15 October, 1987 (15.10.87), Claims; page 11, upper right column & US 4762862 A & DE 3706852 A & GB 2189792 A & FR 2596765 A | 1-13 |

☐ Further documents are listed in the continuation of Box C. ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>18 May, 2004 (18.05.04) | Date of mailing of the international search report<br>15 June, 2004 (15.06.04) |
| --- | --- |
| Name and mailing address of the ISA/<br>   Japanese Patent Office | Authorized officer |
| Facsimile No. | Telephone No. |

Form PCT/ISA/210 (second sheet) (January 2004)